# EUROPÄISCHE PATENTANMELDUNG

(11) **EP 1 742 445 A1**
(43) Veröffentlichungstag der Anmeldung: **10.01.2007**
(21) Anmeldenummer: 05014694.3
(22) Anmeldetag: 06.07.2005
(51) Int. Cl.: H04L 29/12

(54) **Automatischer Rufaufbau durch ENUM Fehlerbehandlung**

(71) Anmelder: SIEMENS AKTIENGESELLSCHAFT, 80333 München (DE)
(72) Erfinder: Flemisch, Felix, 81547 München (DE); Heiles, Jürgen, 81476 München (DE); Ottensmeyer, Jörg, 85635 Höhenkirchen (DE); Schink, Helmut, Dr., 81927 München (DE)

(57) **Zusammenfassung**

Bei der Einführungsphase von ENUM ergibt sich ein Problem, wenn für den angerufenen Teilnehmer kein ENUM-Eintrag vorliegt. Der anrufende Teilnehmer kann in dieser Situation zwar eine ENUM-Abfrage starten, erhält aber nur eine Fehlermeldung, da zu diesem FQDN kein ENUM-Eintrag (NAPTR) existiert.

Um für den anrufenden Teilnehmer eine solche Situation angenehmer zu gestalten, wird in einer solchen Situation erfindungsgemäß automatisch versucht, den zu dem FQDN gehörigen Teilnehmer anzurufen.

## Beschreibung

### 1. Problem, das der Erfindung zugrunde liegt

In konvergenten Netzen, d.h. in Telekommunikationsnetzen, in denen die klassischen Telekommunikationsdienste auf einer Infrastruktur angeboten werden, die auf Protokollen des Internet basiert, stellt die Adressierung des Teilnehmers ein Problem dar, da unterschiedliche Nummernräume (im Internet die IP Adressen und Domain Namen, in der Telephonie, die sog. E.164 Nummern) verwendet werden. Dieses Problem soll gemäß Beschluss der ITU und der IETF, also den zuständigen Standardisierungsgremien, durch ENUM gelöst werden. Dabei werden vom Endgerät die Telefonnummern nach E.164 in einen Domain Namen gewandelt, und dieser Fully Qualified Domain Name (FQDN) dann zu einem DNS (Domain Name Server) geschickt, um die dazugehörigen Adressierungsmöglichkeiten in Form der NAPTR Records (z.B. via e-mail, SIP Telefon etc.) zu erhalten.

In diesem Zusammenhang ergibt sich ein Problem, wenn der angerufene Teilnehmer keinen ENUM-Eintrag besitzt. Dieser Fall wird in der Einführungsphase sehr häufig sein, da die Regulierungsbehörden entschieden haben, dass der Teilnehmer aktiv diesen Eintrag vornehmen muss ("user opt in"). Es ist damit zu rechnen, dass es viele Jahre dauern wird bis ein Großteil der Teilnehmer sich für einen ENUM Dienst entschieden hat. In dieser Phase kann der anrufende Teilnehmer zwar eine ENUM Abfrage starten, erhält aber nur eine Fehlermeldung, da zu diesem FQDN kein Eintrag existiert.

Das Problem liegt darin, diese Teilnehmer möglichst komfortabel erreichen zu können.

### 2. Bisherige Lösung des genannten Problems

Bisher muss der anrufende Teilnehmer eine separate Prozedur starten um z.B. über SIP und einen SIP Proxy einen standardisierten Ruf aufzubauen.

### 3. Lösung des Problems gemäß der Erfindung

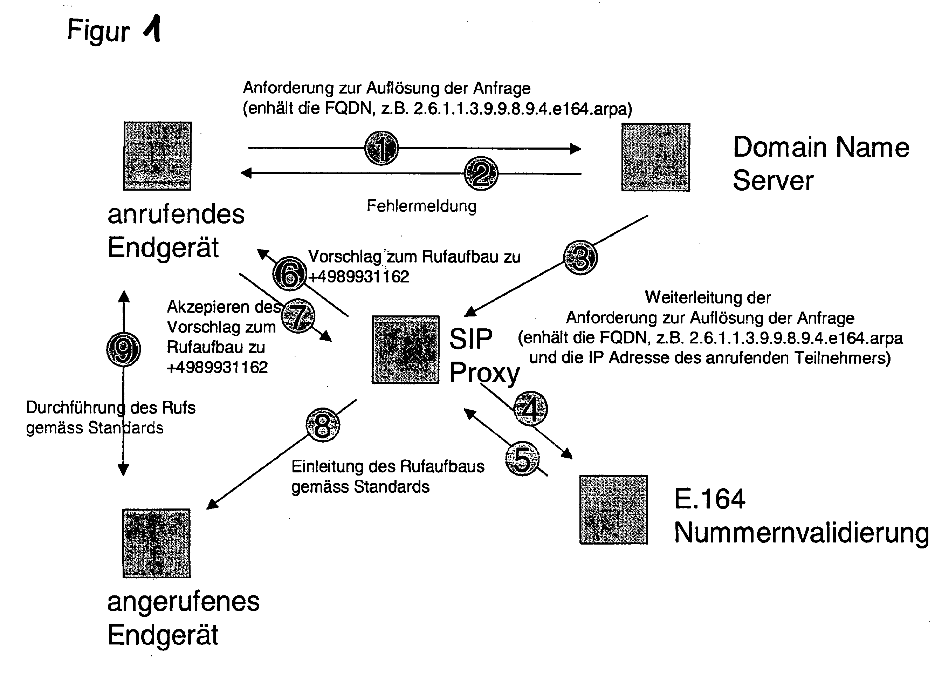

Im Folgenden wird die Erfindung anhand der Zeichnung, die eine Figur umfasst, näher erläutert.

Gemäß der Erfindung wird der Rufaufbau für einen Tln nach einer fehlgeschlagenen ENUM-Abfrage automatisch gestartet. Der Ruf wird entweder direkt aufgebaut, wenn der angerufene Tln über VoIP erreichbar ist, bzw. über ein Media Gateway, wenn der angerufene Tln ein POTS Teilnehmer ist. Dies wird bspw. wie folgt realisiert.

Der FQDN, welcher von dem Endgerät eines anrufenden Teilnehmers enthält die vollständige Telefonnummer des angerufenen Teilnehmers. Wenn kein ENUM Eintrag (in Form eines NAPTR) vorliegt, d.h. der angerufene Teilnehmer sich noch nicht eintragen hat lassen, erzeugt der DNS Server eine Nachricht an den VoIP Proxy, z.B. SIP Proxy des Anrufers.

Diese Nachricht enthält den ursprünglichen FQDN, die IP Adresse des anrufenden Teilnehmers und die Meldung, dass kein ENUM Eintrag existiert. Der SIP Proxy nimmt daraufhin eine Validierung der aus dem FQDN entnehmbaren Rufnummer des angerufenen Teilnehmers (beispielsweise durch die Abfrage einer Number Portability Datenbank) vor, um den Netzanbieter zu ermitteln, zu dem die Rufnummer des angerufenen Teilnehmers gehört (Erläuterung: Der SIP Proxy muss die B-Seite für den nachfolgenden Rufaufbau bestimmen bzw das Gateway dahin finden). Daraufhin schickt der SIP-Proxy eine Verbindungsaufbau Nachricht zum dem anrufenden Endgerät. Nimmt der anrufende Teilnehmer die Verbindung an, baut der SIP Proxy das zweite Call Leg zu dem ursprünglich angerufenen Tln auf. Ist der angerufene Tln ein POTS Teilnehmer, wird der Ruf über das Media Gateway des Netzanbieters vermittelt.

Der Verbindungsaufbau wird somit beschleunigt. Der anrufende Teilnehmer muss nur noch bestätigen, oder dies per Voreinstellung automatisch durchführen lassen.

## Patentansprüche

1. Verfahren zur Verbesserung der Kommunikation in Kommunikationsnetzen, demgemäß
a) von einem Endgerät eines Teilnehmers an einen DNS eine ENUM-Anfrage gestellt wird,
b) von dem DNS anhand des in der ENUM-Anfrage angegebenen FQDN versucht wird, einen zugehörigen ENUM-Eintrag zu ermitteln,
c) wenn zu dem FQDN kein ENUM-Eintrag vorliegt, versucht wird, den zu dem FQDN gehörigen Teilnehmer anzurufen, und zwar durch die Auswertung des FQDN.

2. Verfahren nach Anspruch 1,
**dadurch gekennzeichnet,**
**dass** der Versuch des genannten Anrufs unter Zuhilfenahme von VoIP durchgeführt wird.

3. Verfahren nach Anspruch 1 oder 2,
**dadurch gekennzeichnet,**
**dass**
a) von dem DNS Server eine Fehlermeldung an einen SIP Proxy des Anrufers gesendet wird, wenn kein ENUM-Eintrag ermittelt werden konnte,
b) von dem SIP Proxy daraufhin versucht wird, einen Ruf zwischen dem Anrufer und dem Tln aufzubauen, für den die ENUM-Abfrage zuvor fehlgeschlagen ist.

4. SIP Proxy eines ENUM-Teilnehmers, der
a) eine von einem DNS-Server weitergeleitete ENUM-Anfrage eines Teilnehmers empfängt, wenn der DNS-Server bezüglich dieser ENUM-Anfrage keinen ENUM-Eintrag (NAPTR) ermitteln konnte,
b) daraufhin als Vertreter des Teilnehmers versucht, den zu dem FQDN gehörigen Teilnehmer über Voice over IP bzw. das Media Gateway seines Netzbetreibers anzurufen.

5. SIP Proxy nach Anspruch 4,
**dadurch gekennzeichnet,**
**dass** der SIP Proxy vor dem genannten Anruf eine Bestätigung des anrufenden Teilnehmers über dessen Endgerät einholt.

6. SIP Proxy nach Anspruch 4,
**dadurch gekennzeichnet,**
**dass** der SIP Proxy den genannten Anruf automatisch durchführt ohne eine Bestätigung des anrufenden Teilnehmers einzuholen.
